(19)

Europäisches
Patentamt
European
Patent Office
Office européen
des brevets

(11) **EP 2 779 608 A1**

(12) **EUROPEAN PATENT APPLICATION**

(43) Date of publication:
**17.09.2014 Bulletin 2014/38**

(51) Int Cl.:
*H04M 3/30* (2006.01)     *H04M 11/06* (2006.01)
*H04B 3/46* (2006.01)

(21) Application number: **13305290.2**

(22) Date of filing: **14.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Dupuis, Nicolas**
**4051 Chaudfontaine (BE)**

• **Drooghaag, Benoît**
**1421 Ophain-Bois-Seigneur-Isaac (BE)**

(74) Representative: **D'Halleweyn, Nele Veerle Trees Gertrudis et al**
**Arnold & Siedsma**
**Sweelinckplein 1**
**2517 GK Den Haag (NL)**

Remarks:
Amended claims in accordance with Rule 137(2) EPC.

(54) **Method and system for assessing communication lines in a network subject to crosstalk**

(57)     A method for assessing a plurality of communication lines in a network subject to crosstalk, the method comprising obtaining sets of crosstalk compensation coefficients for respective lines of said plurality of communication lines, respective coefficients of each set pertaining to compensation of crosstalk from each other line of said plurality of communication lines; generating histogram information for respective sets of crosstalk compensation coefficients; and comparing said histogram information of a target communication line of said plurality of communication lines to reference information to determine whether said target communication line is affected by an impairment.

## Figure 3

**Description**

**Field of the Invention**

The present invention relates to the field of wired communication networks, and in particular to the field of analyzing line impairments and crosstalk between lines in such networks.

**Background**

In wired communication networks such as DSL networks, large numbers of lines originate from a common node, the access node, and remain in proximity to each other over a varying portion of their trajectory towards their respective end points, at the customer premises equipment. The signals carried by any given line couples into other nearby lines by electromagnetic radiation, thus causing crosstalk in the affected lines. Crosstalk is especially severe between lines that are physically combined in a single binder. Generally, network operators benefit from having adequate knowledge of the amount of crosstalk coupling between lines, and of the existence of any line impairments such as bad contacts, shorts, bridged taps, gauge changes etc.

European patent application EP 2 117 129 A1 in the name of the present applicant describes statistical analysis of crosstalk, on the basis of crosstalk channel coupling coefficients.

European patent application EP 2 365 661 A1 in the name of the present applicant describes a method and devices for network topology identification. Its purpose is to identify binders of lines on the basis of their measured crosstalk channel coupling coefficients.

It is a disadvantage of the known methods and system that they require certain a priori knowledge about the loop plant and the applicable crosstalk models. It is a further disadvantage of the known methods and systems that they fail to provide correct results when certain channel impairments are present.

**Summary**

It is a goal of embodiments of the present invention to at least partially overcome the cited disadvantages.

According to an aspect of the invention, there is provided a method for analyzing crosstalk between a plurality of communication lines, the method comprising: obtaining sets of crosstalk compensation coefficients for respective lines of the plurality of communication lines, respective coefficients of each set pertaining to compensation of crosstalk from each other line of the plurality of communication lines; generating histogram information for respective sets of crosstalk compensation coefficients; and comparing the histogram information of a target communication line of the plurality of communication lines to reference information to determine whether the target communication line is affected by an impairment.

Throughout this application, the term "histogram information" is used to denote a histogram, a cumulative distribution, or any mathematically equivalent set of data that provides a statistical estimate of the distribution of the crosstalk compensation coefficients.

Throughout this application, the term "impairment" is used in a broad sense to cover channel conditions that negatively affect the channel's ability to sustain communication in a significant way. It includes physical impairments affecting the channel, such as bad contacts, shorts, bridged taps, gauge changes, as well as extreme line lengths. The term also covers any implementation faults, bugs, and other equipment faults that have an impact on the perceived quality of the channel between the transmitter and the receiver.

The present invention is based *inter alia* on the insight of the inventors that unlike the crosstalk coupling coefficients, the crosstalk compensation coefficients are readily obtainable at a vectoring enabled access node. The present invention is further based on the insight of the inventors that these crosstalk compensation coefficients include information about network topology - in particular binders of lines - as well as line impairments.

The invention obtains its goal by using the histogram of a set of crosstalk compensation coefficients of a particular target line to determine whether this line presents an impairment. A "regular", impairment-free histogram should present a roughly bimodal distribution of crosstalk compensation coefficients, wherein the peak situated at higher values groups the lines that are in the same binder as the target line, and the peak situated at lower values groups the lines that are not in the same binder as the target line. If a sufficiently accurate reference histogram representing the "regular" situation is available, for instance from prior measurements or from a mathematical derivation, it can be used to test lines for impairments on the basis of the measured histogram of their crosstalk compensation coefficients. Any significant deviation from the reference model may be considered a sign of an impairment.

In an embodiment, the method according to the present invention further comprises deriving the reference information from the set of crosstalk compensation coefficients.

In general, it is not possible to postulate the exact shape of the "regular" distribution referred to above, without some a priori knowledge about the loop plant and its crosstalk coupling behavior.

The cited embodiment has the advantage that it doesn't require any *a priori* information about the shape of the "regular" histogram. This information is constructed little by little from observing the actual sets of crosstalk compensation coefficients. The entire method thus becomes self-learning, in an unsupervised way.

In a particular embodiment, the deriving comprises: for each one of the communication lines, comparing the histogram information of the one of the communication lines to a deduced histogram information to determine whether the one of the communication lines is affected by an impairment; and updating the deduced histogram information with the histogram information of the one of the communication lines if the comparing indicates that the one of the communication lines is not affected by an impairment.

This is a particularly advantageous way of building up the reference histogram, which may be then be used to determine the presence of impairments in subsequently treated target lines.

The term "deduced histogram information" is used to designate reference histogram information that is deduced from one or more actual histograms of communication lines that are assessed. It is iteratively updated as additional communication lines are processed. The deduced histogram information preferably represents a maximum likelihood estimation of the distribution of crosstalk compensation coefficients. Note that when the processed histograms exhibit several clusters of trends, the maximum likelihood distribution will be close to the average of the dominant cluster trend.

In an embodiment of the method according to the present invention, the comparing comprises applying a non-parametric Kolmogorov-Smirnov test.

The non-parametric Kolmogorov-Smirnov is a particularly advantageous choice for the algorithm that compares target histogram information to reference histogram information, because it requires no *a priori* assumptions about the nature of the distribution.

In an embodiment, the method according to the present invention further comprises dividing the plurality of communication lines in distinct groups, on the basis of the histogram information, wherein communication lines identified as being affected by an impairment are excluded from the dividing.

It is an advantage of this embodiment that the aforementioned impairment detection is leveraged to perform a more reliable identification of loop binders.

According to an aspect of the invention, there is provided a computer program comprising software means configured to perform, when executed, the method described above.

According to an aspect of the invention, there is provided an apparatus for assessing a plurality of communication lines in a network subject to crosstalk, said plurality of communication lines being attached to an access node, the apparatus comprising: an input interface adapted to obtain sets of crosstalk compensation coefficients for respective lines of the plurality of communication lines from the access node; processing means configured to apply the method described above to the sets of crosstalk compensation coefficients; and an output interface.

The apparatus may for example be implemented on or in conjunction with a dedicated system or part thereof, such as the Alcatel-Lucent 5530 Network Analyzer marketed by the present applicant, or as a suitably configured general-purpose computer.

In an embodiment, the apparatus according to the present invention is further adapted to communicate via the output interface an identification of communication lines for which an impairment has been detected.

In an embodiment of the apparatus according to the present invention, the processing means is configured to apply the method of claim 5 to the sets of crosstalk compensation coefficients; and the apparatus is further adapted to communicate via the output interface an identification of the distinct groups.

In an embodiment of the apparatus according to the present invention, the output interface is a graphical user interface.

In an embodiment of the apparatus according to the present invention, the output interface is a management protocol interface.

The technical effects and advantages of the computer program and the apparatus according to embodiments of the present invention correspond, *mutatis mutandis,* to those of the corresponding methods according to the embodiments of the present invention.

## Brief Description of the Figures

Some embodiments of apparatus and/or methods in accordance with embodiments of the present invention are now described, by way of example only, and with reference to the accompanying drawings, in which:

Figure 1 schematically illustrates a wired access network consisting of an access node and three lines terminated by respective pieces of customer premises equipment;

Figure 2 schematically illustrates crosstalk coupling between lines in a generalized wired access network;

Figure 3 schematically illustrates crosstalk compensation coefficients between lines in a generalized wired access network;

Figure 4 presents a flow chart of a method according to an embodiment of the present invention;

Figure 5 shows an exemplary histograms of a set of crosstalk compensation coefficients;

Figure 6 shows a number of exemplary distributions of crosstalk compensation coefficients for different types of communication lines;

Figure 7 schematically illustrates an algorithm for comparing histogram information to a reference;

Figure 8 schematically illustrates heatmap processing according to embodiments of the present invention; and

Figure 9 illustrates an apparatus according to an embodiment of the present invention.

**Description of Embodiments**

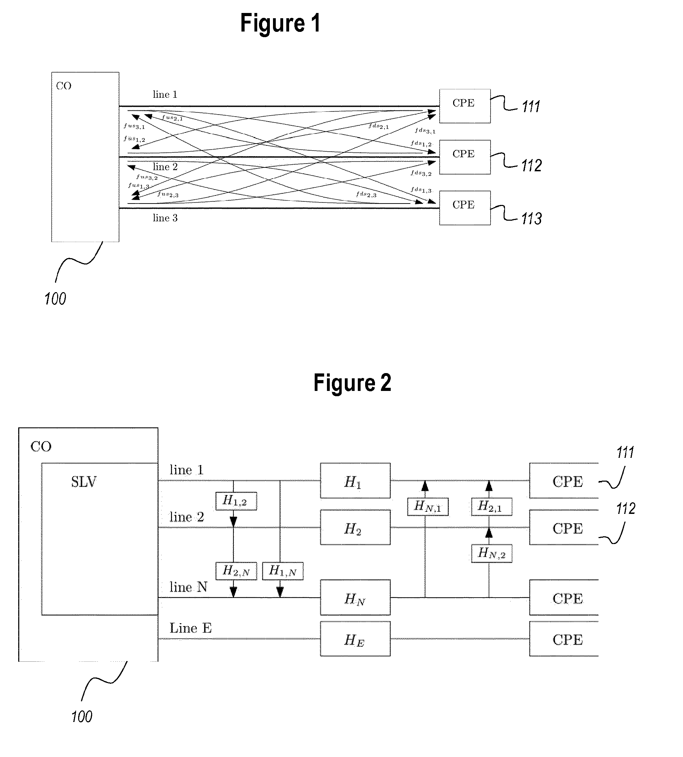

Figure 1 schematically illustrates a wired access network, such as a digital subscriber line (DSL) network, consisting of an access node **100** and three lines terminated by respective pieces of customer premises equipment **111, 112, 113.** In all the figures, the illustrated number of lines and customer premises equipment is chosen purely for illustrative purposes and without loss of generality.

With the increasing deployment of IPTV solutions, Video-On-Demand offers or Triple-play services, both the system performances and the customer support becomes more and more exigent, particularly on digital subscriber lines. The physical link, which transports the information through wire lines up to the end user, is known to be the bottleneck for the Quality of Service. Hence, it is of prime importance to be able to remotely diagnose sources of physical problems and take actions to improve the performances. This helps the operators to gain in service quality as well as to save money and time by not involving human interventions for all types of requests.

Moreover, recent technology evolutions tend to push the signal bandwidth of the DSL lines higher and higher. While traditional ADSL technology used frequencies up to 1.1 MHz, the current VDSL2 technology can be applied up to 30 MHz. The extensive use of those higher frequencies, as well as of more and more advanced solutions to achieve higher performance, render the DSL link more sensitive to disturbances.

Figure 2 schematically illustrates crosstalk coupling between lines in a generalized wired access network. The cross-coupling between each pair of coefficients is represent by the crosstalk coupling coefficients $H_{i,j}$.

One of the most advanced techniques available today to increase the performance of VDSL2 technology is vectoring. Vectoring consists in cancelling the crosstalk noise between adjacent lines, by injecting a compensation signal on each line. This compensation signal is computed so as to be the exact opposite of the crosstalk noise coming from all the neighboring lines towards the line where it is injected.

Injection is typically done at the access node **100** (for instance located at a central office), where information about all the lines is available, by a precoder (for the downstream signal) or a postcoder (for the upstream signal). Applying the processing at the access node **100** avoids placing an additional computational burden on the customer premises equipment **111, 112, 113,** ... .

The crosstalk compensation coefficients represent the coefficient with which each of the respective original signals of the other lines must be multiplied to obtain a signal that, when added to the signal of the target line, will (at least partially) compensate the expected crosstalk from the respective other lines. As this crosstalk compensation technique considers the entire loop plant as a communication medium and applies a vector of signals to the set of lines to optimize signal detection, the technique is commonly referred to as vectoring. The crosstalk compensation coefficients referred to herein, are also known as vectoring compensation signal coefficients.

The quality of the crosstalk compensation employed in vectoring relies on a correct calculation of the crosstalk compensation coefficients, hereinafter denoted as $G_{i,j}$. These coefficients do not only express the coupling between the pairs, but also the direct channel transfer function $H_{j,j}$ of the processed pair, as this pair itself will also affect the transmitted signal:

$$|G_{i,j}| = \frac{|H_{i,j}|}{|H_j|}$$

$$x_{ds,j} = data_j + \sum_{i=1,i\neq j}^{N} G_{i,j}\, data_i$$

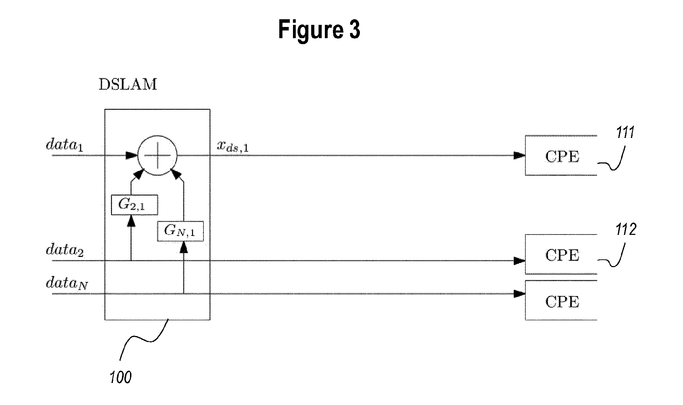

Figure 3 schematically illustrates the crosstalk compensation coefficients between lines in a generalized wired access network.

As these coefficients are directly used by the pre- or postcoder (in the downstream and upstream direction, respectively), any inaccuracies will directly impact the effectiveness of the crosstalk compensation or cancellation mechanism.

Hereinafter, we will consider a matrix G, containing all these coefficient values $G_{i,j}$. The magnitude of such matrix is commonly called a "heatmap".

Field experience indicates that impaired lines are often present among the lines of a vectoring group, and that they render a correct detection of binder grouping patterns from the G matrix impossible. Indeed, weak connectors, oxidation, bridged-taps, CPE bugs, etc... or, in general, all possible impairments (defects) that affect the value of the direct-path transfer function or the crosstalk channel transfer function, may significantly change the value of the $G_{i,j}$ coefficients, which results in new patterns in the G matrix.

Embodiments of the present invention combine line impairment detection with clustering of the pairs in binders on the basis of the crosstalk compensation coefficient matrix G, to drastically improve the accuracy and robustness of the respective identification.

Through this invention, a general method is presented to reliably make the distinction between the heatmap (G) patterns of channel impairments and the patterns of the binder topology, in order to separate them and to launch, in a later stage, an appropriate method for characterization.

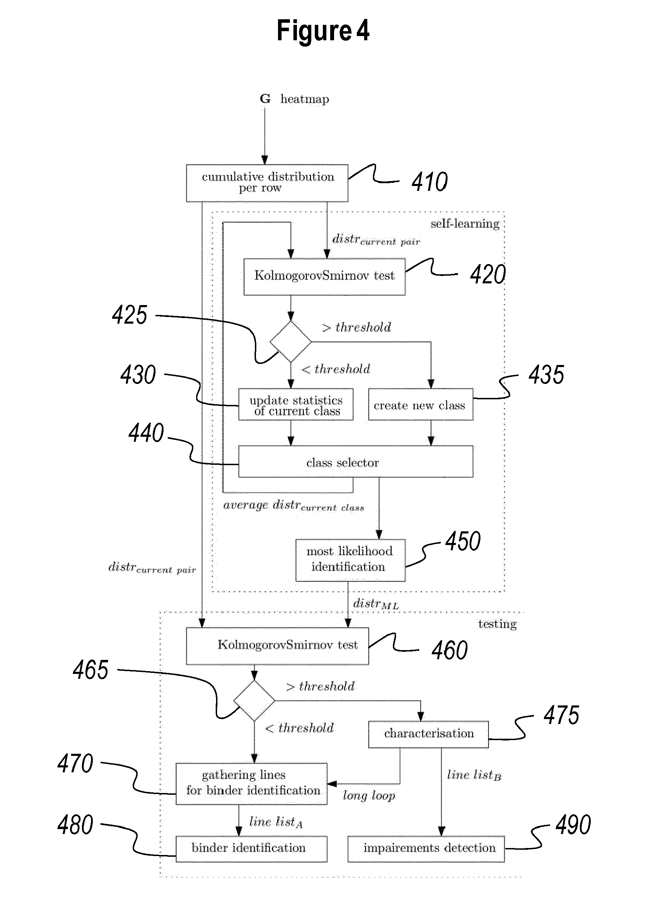

With reference to Figure 4, there is provided a method for analyzing crosstalk between a plurality of communication lines, comprising: obtaining sets of crosstalk compensation coefficients for respective lines of the plurality of communication lines, respective coefficients $G_{i,j}$ of each set i pertaining to cancellation of crosstalk from each other line j of the plurality of communication lines; generating histogram information **410** for respective sets of crosstalk compensation coefficients; and comparing **460** the histogram information of a target communication line of the plurality of communication lines to reference information **450** to determine whether the target communication line is affected by an impairment.

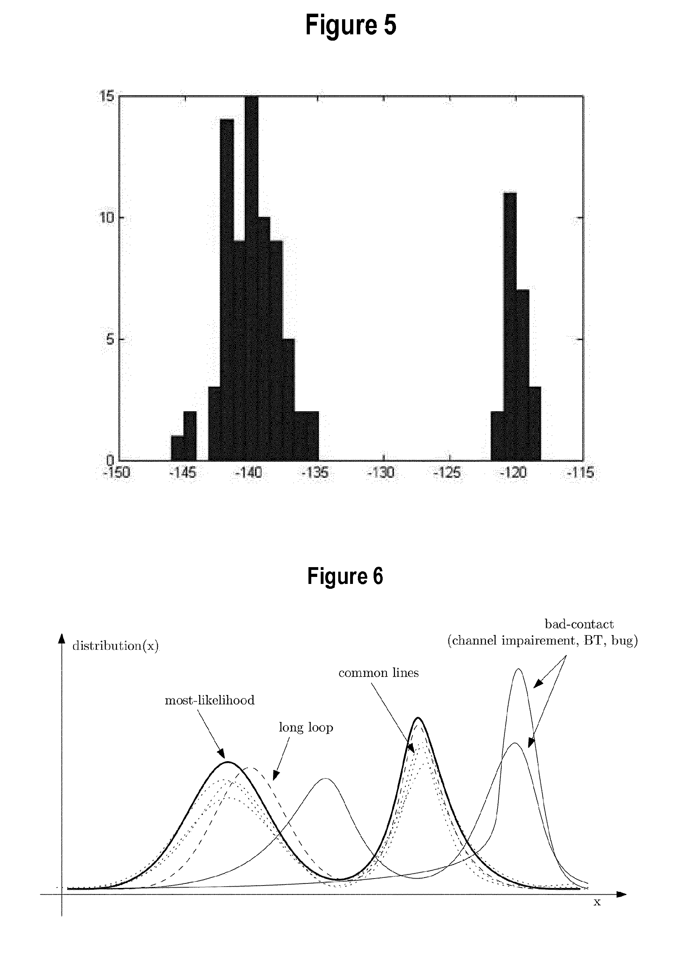

An exemplary histogram, such as the one generated in step **410** is shown for illustrative purposes in Figure 5.

As summarized in Figure 4, the identification of impairments allows distinguishing lines subjected to common behavior/patterns and mainly driven by topological patterns from lines presenting patterns of channel impairments. For that purpose, any type of statistical distribution goodness-of-fit test **460** can be used. If there is a significant deviation **465,** then according to the nature of the deviation (as presented in Figure 6), a distinction can be made **475/490** between several types of impairments and excessive loop lengths, and further processing may be addressed accordingly. If there is no deviation **465,** then the line is candidate for topological pattern processing **470/480.**

In an embodiment, the method according to the present invention further comprises deriving the reference information **420-450** from the set of crosstalk compensation coefficients.

Accordingly, the method preferably provides a combined learning-comparing approach, in which the most likelihood estimation of the distribution is identified, whereupon the distribution of the crosstalk compensation coefficients of respective lines is compared to this distribution.

In a particular embodiment, the deriving comprises: for each one of the communication lines, comparing **420-425** the histogram information of the one of the communication lines to a deduced histogram information to determine whether the one of the communication lines is affected by an impairment; and updating **430** the deduced histogram information with the histogram information of the one of the communication lines if the comparing **420-425** indicates that the one of the communication lines is not affected by an impairment.

During the learning stage **420-450,** relevant information can be learned from the distribution computed for consecutive lines:

- consolidation **430** of the current classes (current cluster of data consolidates);
- creation **435** of new classes (new cluster of data appear).

Even in the presence of patterns from different binders, the coupling between lines belonging to a given binder with lines of another binder does not drastically vary, as these binders are usually organized in a similar way. This means that for most of the lines belonging to another binder, a similar distribution of the coupling values will be observed.

The appearance of other types of data clusters (classes) or shifts in the cluster position in the estimated distribution is usually related to one or more lines presenting different properties. In other words, lines presenting a distribution that significantly deviates from the most likelihood distribution are therefore suspected to contain signature of particular characteristics, such as the bad contacts. Longer loops can also be recognized through this method and rightly processed in a later stage.

These considerations are summarized in Figure 6.

To preferred self-learning (a.k.a. unsupervised learning) technique requires no prior knowledge to identify the most probable behavior, as the latter is directly derived **450** from the current heatmap data alone. Preferably, the self-learning phase is based on the comparison of one distribution to another one. If they are sufficiently close, they are gathered and counted as belonging to the same class; if not, another class is created with the second distribution. This comparison is consecutively repeated for all the heatmap row distributions and statistics and counters are updated in each created class if distributions are matching one of them. This method is a simplification of the well-known Expectation-Maximization (EM) algorithm.

The method then returns to the second stage, as described above, wherein each heatmap row distribution is compared to the most likelihood distribution.

In an embodiment of the method according to the present invention, the comparing comprises applying a non-parametric Kolmogorov-Smirnov test.

The non-parametric Kolmogorov-Smirnov test is preferred to perform the distribution comparisons, because of its ability to operate without any statistical prior assumptions regarding the tested distributions (which is suitable when working with field data and when there is no prior knowledge regarding this topic) and also for its ability to provide reliable results even in the case of estimations performed on few samples.

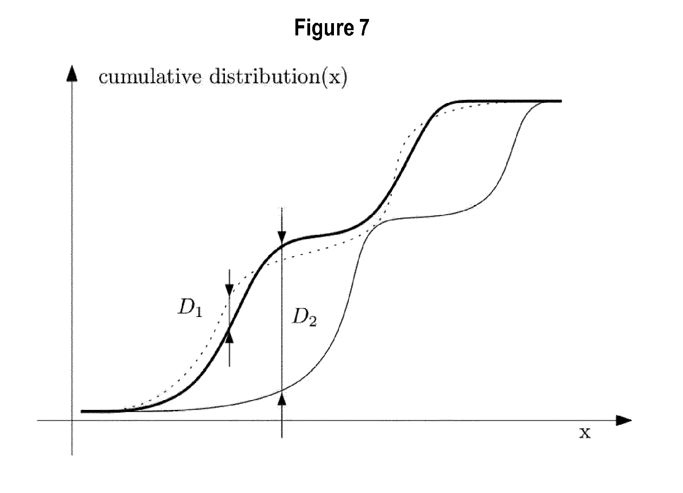

Practically, this method makes use of two cumulative distributions (in our case the one of the current line with respect to the average distribution of the current class) to perform a comparison (to compute a distance) between the two, which is compared to a threshold. This is illustrated in Figure 7.

In an embodiment, the method according to the present invention further comprises dividing the plurality of communication lines in distinct groups **470/480,** on the basis of the histogram information, wherein communication lines identified as being affected by an impairment **460/465/475/490** are excluded from the dividing.

The distinct groups represent an estimate of the physical grouping of the actual communication lines in binders. The grouping of lines is preferably based on a measure of closeness or similarity of the pattern of their crosstalk compensation coefficients. The groups represent sets of lines that mutually experience relatively high crosstalk. It should be emphasized however that the presence of high coupling between to communication lines (as expressed by a high crosstalk compensation signal coefficient) is not necessarily an indication that these lines are in the same binder, as certain impairments can cause high crosstalk compensation coefficients to appear between communication lines in different binders - this is precisely why impaired lines should be excluded from the binder grouping process.

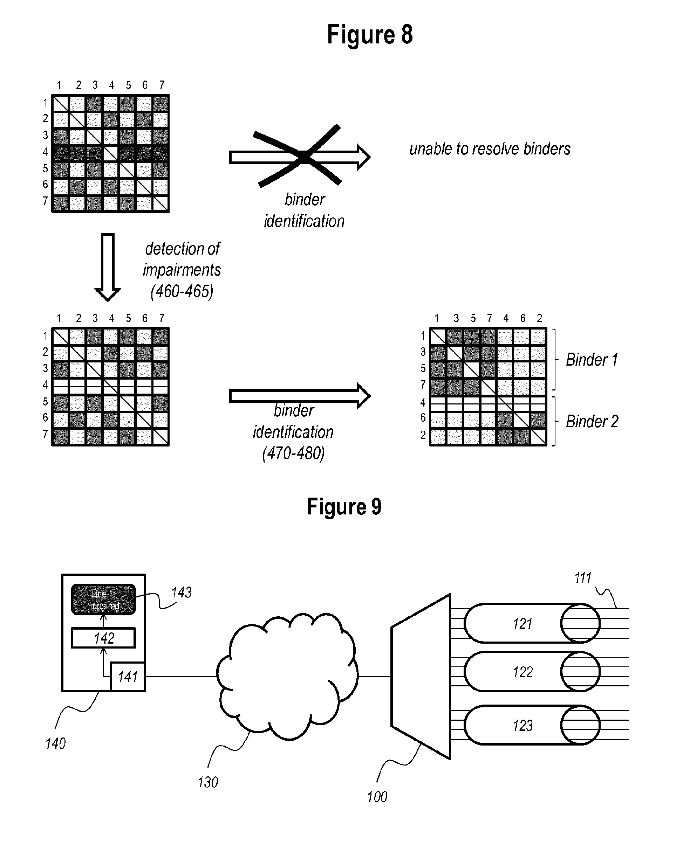

The two-step grouping process is illustrated by the artificial example of Figure 8. Without loss of generality, a heatmap is shown in the top left corner of the figure for a loop plant comprising seven lines, grouped in two binders. Lines 1, 3, 5, and 7 constitute binder 1; lines 2, 4, and 6 constitutes binder 2. In the illustrated exemplary heatmap, darker shades of gray represent higher values of the crosstalk compensation coefficients. It can be seen that lines belonging to the same binder have higher mutual crosstalk compensation coefficients. Line 4 represents an exemplary impairment: due to a loose contact, it has a very low direct transfer function magnitude, resulting in high crosstalk compensation coefficients towards all the other lines. An attempt to perform binder identification on the original heatmap would fail to resolve the two binders, because all lines will be considered to be highly coupled to line 4, which will therefore be interpreted as a representative of a single, large binder including all the lines. If, however, the impairment is detect first **460-465,** according to the method described above, the cleaned up heatmap shown in the bottom left corner of the figure can be used as the input for the binder identification process, resulting in the correct identification of both binders as shown in the bottom right corner of the figure.

Figure 9 illustrates an apparatus **140** according to an embodiment of the present invention. The apparatus **140** is configured to assess a plurality of communication lines **111-**... in a network subject to crosstalk, the communication lines **111-...** being attached to an access node **100.**

The apparatus **140** comprises: an input interface **141** adapted to obtain sets of crosstalk compensation coefficients for respective lines of the plurality of communication lines from the access node **100;** processing means **142** configured to apply the method described above to the sets of crosstalk compensation coefficients; and an output interface **143.**

The term "interface" designates the necessary hardware and software required to establish data communication connectivity across the various layers of the protocol stack, as is well known to a person skilled in the art. Preferably, standardized protocols are used. An access interface may for instance include an interface for an xDSL, xPON, WMAN, or 3G link. A LAN interface may for instance include an interface for one or more of an IEEE 802.3 "Ethernet" link, an IEEE 802.11 "Wireless LAN" link. A PAN interface may for instance include a USB interface or a Bluetooth interface.

The details given above with respect to the embodiments of the method according to the invention apply equally to the embodiments of the apparatus according to the invention, and are therefore not explicitly repeated here.

In an embodiment, the apparatus **140** according to the present invention is further adapted to communicate via the output interface **143** an identification of communication lines for which an impairment has been detected.

In an embodiment of the apparatus **140** according to the present invention, the apparatus **140** is further adapted to communicate via the output interface **143** an identification of the distinct groups **121, 122, 123.**

In an embodiment of the apparatus **140** according to the present invention, the output interface **143** is a graphical user interface.

In an embodiment of the apparatus **140** according to the present invention, the output interface **143** is a management protocol interface.

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

1. A method for assessing a plurality of communication lines in a network subject to crosstalk, the method comprising:

   - obtaining sets of crosstalk compensation coefficients for respective lines of said plurality of communication lines, respective coefficients of each set pertaining to compensation of crosstalk from each other line of said plurality of communication lines;
   - generating histogram information for respective sets of crosstalk compensation coefficients; and
   - comparing said histogram information of a target communication line of said plurality of communication lines to reference information to determine whether said target communication line is affected by an impairment.

2. The method according to claim 1, further comprising deriving said reference information from said set of crosstalk compensation coefficients.

3. The method according to claim 2, wherein said deriving comprises:

   - for each one of said communication lines, comparing said histogram information of said one of said communication lines to a deduced histogram information to determine whether said one of said communication lines is affected by an impairment; and
   - updating said deduced histogram information with said histogram information of said one of said communication lines if said comparing indicates that said one of said communication lines is not affected by an impairment.

4. The method according to any of the preceding claims, wherein said comparing comprises applying a non-parametric Kolmogorov-Smirnov test.

5. The method according to any of the preceding claims, further comprising dividing said plurality of communication lines in distinct groups, on the basis of said histogram information, wherein communication lines identified as being affected by an impairment are excluded from said dividing.

6. A computer program comprising software means configured to perform, when executed, the method of any of the preceding claims.

7. An apparatus for assessing a plurality of communication lines in a network subject to crosstalk, said plurality of communication lines being attached to an access node, said apparatus comprising:

   - an input interface adapted to obtain sets of crosstalk compensation coefficients for respective lines of said plurality of communication lines from said access node;
   - processing means configured to apply the method of any of claims 1-5 to said sets of crosstalk compensation coefficients; and
   - an output interface.

8. The apparatus according to claim 7, further adapted to communicate via said output interface an identification of communication lines for which an impairment has been detected.

9. The apparatus according to claim 7 or claim 8,
   wherein said processing means is configured to apply the method of claim 5 to said sets of crosstalk compensation coefficients;
   the apparatus being further adapted to communicate via said output interface an identification of said distinct groups.

10. The apparatus according to any of claims 7-9, wherein said output interface is a graphical user interface.

11. The apparatus according to any of claims 7-9, wherein said output interface is a management protocol interface.

**Amended claims in accordance with Rule 137(2) EPC.**

1. A method for assessing a plurality of communication lines in a network subject to crosstalk, **characterized in that** the method comprises:

   - obtaining sets of crosstalk compensation coefficients for respective lines of said plurality of communication lines, respective coefficients of each set pertaining to compensation of crosstalk from each other line of said plurality of communication lines;
   - generating (410) histogram information for respective sets of crosstalk compensation coefficients; and
   - comparing (460) said histogram information of a target communication line of said plurality of communication lines to reference information (450) to determine whether said target communication line is affected by an impairment.

2. The method according to claim 1, further comprising deriving said reference information (420-450) from said set of crosstalk compensation coefficients.

3. The method according to claim 2, wherein said deriving comprises:

   - for each one of said communication lines, comparing said histogram information (420-425) of said one of said communication lines to a deduced histogram information to determine whether said one of said communication lines is affected by an impairment; and
   - updating (430) said deduced histogram information with said histogram information of said one of said communication lines if said comparing (420-425) indicates that said one of said communication lines is not affected by an impairment.

4. The method according to any of the preceding claims, wherein said comparing comprises applying a non-parametric Kolmogorov-Smirnov test.

5. The method according to any of the preceding claims, further comprising dividing said plurality of communication lines in distinct groups (470/480), on the basis of said histogram information, wherein communication lines identified as being affected by an impairment (460/465/475/490) are excluded from said dividing.

**6.** A computer program comprising software means configured to perform, when executed, the method of any of the preceding claims.

**7.** An apparatus (140) for assessing a plurality of communication lines (111) in a network subject to crosstalk, said plurality of communication lines being attached to an access node (100), said apparatus **characterized by** comprising:

- an input interface (141) adapted to obtain sets of crosstalk compensation coefficients for respective lines of said plurality of communication lines from said access node;
- processing means (142) configured to apply the method of any of claims 1-5 to said sets of crosstalk compensation coefficients; and
- an output interface (143).

**8.** The apparatus according to claim 7, further adapted to communicate via said output interface an identification of communication lines for which an impairment has been detected.

**9.** The apparatus according to claim 7 or claim 8,
wherein said processing means is configured to apply the method of claim 5 to said sets of crosstalk compensation coefficients;
the apparatus being further adapted to communicate via said output interface an identification of said distinct groups (121, 122, 123).

**10.** The apparatus according to any of claims 7-9, wherein said output interface is a graphical user interface.

**11.** The apparatus according to any of claims 7-9, wherein said output interface is a management protocol interface.

# Figure 1

# Figure 2

# Figure 3

DSLAM

$data_1$ — ⊕ — $x_{ds,1}$ — CPE — 111

$G_{2,1}$

$G_{N,1}$

$data_2$ — CPE — 112

$data_N$ — CPE

100

# Figure 4

**G** heatmap

cumulative distribution per row — *410*

self-learning

$distr_{current\ pair}$

KolmogorovSmirnov test — *420*

*425*

> threshold

< threshold

*430* update statistics of current class

create new class — *435*

*440* class selector

average $distr_{current\ class}$

most likelihood identification — *450*

$distr_{current\ pair}$

$distr_{ML}$

testing

KolmogorovSmirnov test — *460*

*465*

> threshold

< threshold

characterisation — *475*

*470* gathering lines for binder identification

long loop

line list$_B$

line list$_A$

*480* binder identification

impairements detection — *490*

# Figure 5

# Figure 6

# Figure 7

# Figure 8

detection of
impairments
(460-465)

binder
identification

unable to resolve binders

binder
identification
(470-480)

Binder 1

Binder 2

# Figure 9

Europäisches
Patentamt

European
Patent Office

Office européen
des brevets

## EUROPEAN SEARCH REPORT

Application Number

EP 13 30 5290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOCHEN MAES ET AL: "Maximizing Digital Subscriber Line Performance", BELL LABS TECHNICAL JOURNAL, WILEY, CA, US, vol. 13, no. 1, 1 March 2008 (2008-03-01), pages 105-116, XP002591690, ISSN: 1089-7089, DOI: 10.1002/BLTJ.20285 [retrieved on 2008-05-15] * page 105 - page 114; figures 1-7 * | 1-11 | INV. H04M3/30 H04M11/06 H04B3/46 |
| A | US 6 870 901 B1 (GUDMUNDSSON THORKELL [US] ET AL) 22 March 2005 (2005-03-22) * abstract; figures 3-7,10,12 * * column 10, line 18 - column 14, line 50 * | 1-11 | |
| A | EP 2 538 568 A1 (ALCATEL LUCENT [FR]) 26 December 2012 (2012-12-26) * abstract; claims 1-9; figures 2,3 * * paragraph [0002] - paragraph [0011] * * paragraph [0025] - paragraph [0032] * | 1-11 | |
| | | | TECHNICAL FIELDS SEARCHED (IPC) |
| | | | H04M H04B H04L |

The present search report has been drawn up for all claims

| Place of search | Date of completion of the search | Examiner |
|---|---|---|
| Munich | 19 August 2013 | Ohanovici, Z |

EPO FORM 1503 03.82 (P04C01)

## ANNEX TO THE EUROPEAN SEARCH REPORT
## ON EUROPEAN PATENT APPLICATION NO.

EP 13 30 5290

This annex lists the patent family members relating to the patent documents cited in  the above-mentioned European search report.
The members are as contained in the European Patent Office EDP file on
The European Patent Office is in no way liable for these particulars which are merely given for the purpose of information.

19-08-2013

| Patent document cited in search report | Publication date | Patent family member(s) | Publication date |
|---|---|---|---|
| US 6870901 B1 | 22-03-2005 | NONE | |
| EP 2538568 A1 | 26-12-2012 | NONE | |

EPO FORM P0459

For more details about this annex : see Official Journal of the European Patent Office, No. 12/82

**EP 2 779 608 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2117129 A1
- EP 2365661 A1